# EUROPEAN PATENT SPECIFICATION

(11) **EP 0 625 694 B1**
(45) Date of publication and mention of the grant of the patent: **29.08.2001**
(21) Application number: 94106077.4
(22) Date of filing: 19.04.1994
(51) Int. Cl.: G01F 1/66, G01F 1/32

(54) **Ultrasonic fluid flowmeter**
Ultraschall-Durchflussmesser für ein Fluid
Débitmètre ultrasonique à fluide

(30) Priority: 20.05.1993 JP 11867393; 08.07.1993 JP 16904293; 19.01.1994 JP 424094
(43) Date of publication of application: 23.11.1994
(73) Proprietor: Yokogawa Electric Corporation, Tokyo 180-8750 (JP)
(72) Inventor: Itoh, Ichizo, Kokubunzi-shi, Tokyo 185 (JP); Hondoh, Masanori, Higashimurayama-shi, Tokyo (JP); Yasumatsu, Akio, Musashino-shi, Tokyo 180 (JP)
(74) Representative: Henkel, Feiler, Hänzel

(56) References cited:
- EP-A- 0 277 240
- DE-A- 2 928 454
- FR-A- 2 597 972
- GB-A- 2 165 937

## Description

### BACKGROUND OF THE INVENTION

### Field of the Invention

The present invention relates to an ultrasonic fluid flowmeter for measuring a flow rate of a fluid to be measured by irradiating ultrasonic waves to the fluid, creating a fluid vibration and by receiving a signal of the ultrasonic waves modulated by the fluid vibration and more particularly to an ultrasonic fluid flowmeter improved so that a stable operation may be performed by effectively removing influences of noise.

### Description of the Related Art

As a prior art fluid flowmeter disclosed in JP publication No. 48-17010, there is known to exist a vortex flowmeter for measuring a flow rate of a fluid to be measured by irradiating ultrasonic waves to vortices which is one kind of fluid vibration created when the fluid to be measured hits a vortex generator, by counting the number of vortices and by measuring the flow rate from the frequency thereof, or a fluidic flowmeter for measuring a flow rate of a fluid to be measured by causing a fluid vibration by hitting a jet produced by jetting the fluid through a nozzle to a target and by measuring the flow rate from a difference of pressures generated on both sides of the jet by measuring a vibration frequency of the fluid vibration by using a piezoelectric sensor fixed on an inner wall of a measuring pipe line.

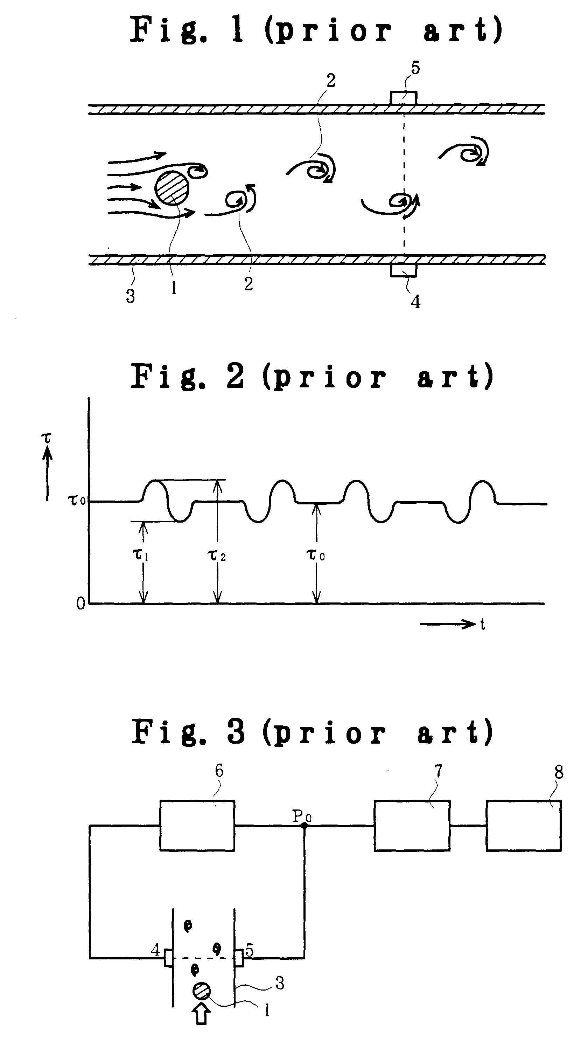

In this specification, the prior art technology will be explained based on the vortex flowmeter among those prior art fluid vibrating flowmeters. At first, a vortex flowmeter disclosed in Japanese Utility Model Publication No. 48-17010 "Flow Velocity Measuring Device" will be taken up and an outline thereof will be explained below with reference to Figs. 1 through 3.

Fig. 1 is a structural drawing showing a structure of the prior art vortex flowmeter. In the figure, a vortex generator 1 inserted in a flow to generate Karman vortices is illustrated as a columnar object. The reference numeral (2) denotes vortexes generated by the vortex generator 1, (3) a measuring pipe line through which a fluid to be measured is flown, (4) an ultrasonic signal transmitter and (5) an ultrasonic signal receiver.

Those ultrasonic signal transmitter 4 and ultrasonic signal receiver 5 are mounted to the measuring pipe line 3 on the downstream side of the vortex generator 1 facing to each other approximately at a right angle with the flow direction of the fluid and are composing a detector for detecting the number of produced Karman vortices (the number of vortices flown in an unit of time).

If there is no vortex on a propagation path of the ultrasonic signal shown by a dotted line in Fig. 1, its propagation time T can be expressed as follows:${\text{τ}}_{\text{o}} {\text{= D/C}}_{\text{A}}$ where D is a distance between the ultrasonic signal transmitter 4 and the ultrasonic signal receiver 5 and C_{A} is a speed of sound within a medium.

Next, a propagation time τ₁ when a Karman vortex exists on this line and when a transmission direction of the ultrasonic and a direction of velocity component V₁ of the vortex is the same may be expressed as follows:${\text{τ}}_{\text{1}} {\text{= [d}}_{\text{v}} {\text{/(C}}_{\text{A}} {\text{+ V}}_{\text{1}} {\text{)] + [(D - d}}_{\text{v}} {\text{)/C}}_{\text{A}} \text{]}$ where dᵥ is a diameter of the vortex.

Further, a propagation time τ₂ when a Karman vortex exists on this line and when the transmission direction of the ultrasonic and the direction of velocity component V₂ of the vortex is opposite may be expressed as follows:${\text{τ}}_{\text{2}} {\text{= [d}}_{\text{v}} {\text{/(C}}_{\text{A}} {\text{- V}}_{\text{2}} {\text{)] + [(D - d}}_{\text{v}} {\text{)/C}}_{\text{A}} \text{]}$ where dᵥ is the diameter of the vortex.

The aforementioned points may be shown as changes of propagation time of the ultrasonic signal to time t as shown in Fig. 2. Then, because the number of times of changes of the propagation time of the signal in an unit of time is equal to the number of vortices passing through the propagation path, i.e. to the number of produced Karman vortices, the flow rate of the fluid may be found out by counting the changes by an adequate device.

Fig. 3 shows an exemplary device for counting the changes which comprises an electronic circuit 6 containing a pulse generator, amplifier and others, a FM signal demodulator 7, a counter 8 and others.

The electronic circuit 6 applies a pulse signal to the ultrasonic signal transmitter 4 and the ultrasonic signal transmitter 4 transmits an ultrasonic signal to the vortex. On the other hand, the ultrasonic signal receiver 5 applies a new pulse signal generated by a received signal modulated by the vortex to the ultrasonic signal transmitter 4 again through the electronic circuit 6.

As a result, a pulse signal P₀ with a frequency reverse-proportional to a total delay time which corresponds to a sum of a delay time of the ultrasonic signal transmitter 4, a propagation time within the fluid, a delay time of the ultrasonic signal receiver 5 and others in the loop of them.

Because the propagation time within the fluid changes every time when a Karman vortex passes, the pulse signal P₀ is a signal whose frequency is modulated by the vortices. This pulse signal P₀ is demodulated by the demodulator 7 and is applied to the counter 8. The flow rate may be obtained from the counting result of the counter 8.

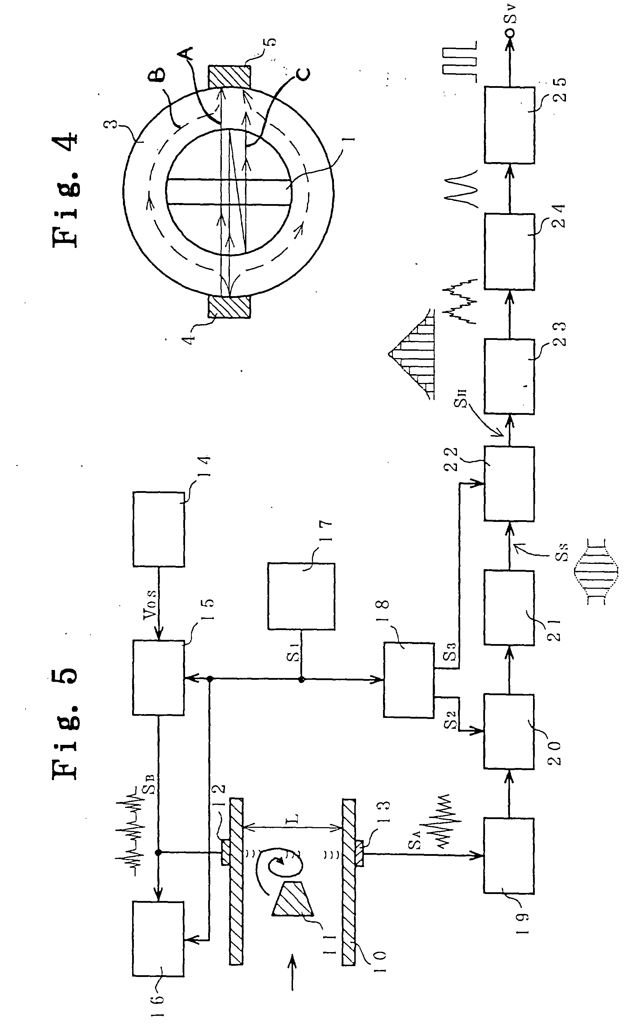

However, although the vortex flowmeter as described above is possible in principle, the following problem arises in actually trying to consummate it as a product. The problem will be explained using a longitudinal section view of the vortex flowmeter shown in Fig. 4.

The vortex generator 1 is fixed in the diametric direction of the measuring pipe line 3 made of stainless steel and the ultrasonic signal transmitter 4 and ultrasonic signal receiver 5 are fixed to the outer wall of the pipe line 3 on the downstream side of the vortex generator 1 facing to each other in a state not contacting with the fluid to be measured.

As a result, as ultrasonic waves are transmitted from the ultrasonic signal transmitter 4, there exist an ultrasonic wave B shown by the dotted line which is received by the ultrasonic signal receiver 5 passing through the inside of the measuring pipe line 3 and an ultrasonic wave C as a standing wave shown by the fine line which is received by the ultrasonic signal receiver 5 after repetitively reflecting with the inner wall of the measuring pipe line 3, beside an ultrasonic wave A shown by the heavy line which is received by the ultrasonic signal receiver 5 passing through the propagation path crossing a vortex.

Those ultrasonic waves B and C are noises and because the ultrasonic signal receiver 5 detects the ultrasonic waves including those noise because the ultrasonic signal transmitter 4 transmits the ultrasonic as a continuous wave in the case of the vortex flowmeter constructed as shown in Fig. 3, the vortices cannot be detected stably and accurately.

As described above, the prior art vortex flowmeter has had a problem that it cannot be realized concretely in a product level due to the existence of the noise propagating within the measuring pipe line or that of the standing wave formed in the measuring pipe line.

Further, the fluidic flowmeter described before has a problem that because it is constructed so as to detect changes of pressure on both sides of a jet by a fluid-contact type piezoelectric sensor provided on the inner wall of a measuring pipe line, it cannot be used in a case when the fluid to be measured is a corrosive or contaminated fluid.

The basic principle of an ultrasonic flow meter based on irradiating ultrasonic waves to air and receiving a signal of the ultrasonic waves modulated by the vibration of the air thus induced is described in DE-A-29 28 454. This known device comprises a triangular prism arranged orthogonal to the flow direction of an air stream within a tube. An ultrasonic transmitter and an ultrasonic receiver are mounted opposite to each other downstream of the prism on the outer wall of the tube. The transmitter generates an ultrasonic wave and the receiver receives an ultrasonic signal whose frequency and amplitude is modulated by vortices created by the prism. The received signal is filtered in a wave shaping circuit to thereby create an AC signal with a frequency proportional to the air flow velocity.

### SUMMARY OF THE INVENTION

It is an object of the invention to provide an ultrasonic fluid flowmeter which is improved with respect to its performance.

According to the invention there is provided an ultrasonic fluid flowmeter as defined in claim 1. Preferred embodiments thereof are defined in the sub-claims.

The specific nature of the present invention, as well as other objects, uses and advantages thereof, will be clearly appear from the following detailed description and from the accompanying drawings.

### BRIEF DESCRIPTION OF THE DRAWINGS

Fig. 1 is a structural drawing showing a structure of a detecting section of a prior art vortex flowmeter;
Fig. 2 is a waveform chart for explaining an operation of the vortex flowmeter shown in Fig. 1;
Fig. 3 is a structural drawing showing the whole structure including the detecting section of the vortex flowmeter shown in Fig. 1;
Fig. 4 is an explanatory drawing for explaining a problem of the vortex flowmeter shown in Fig. 1;
Fig. 5 is a block diagram showing a structure of one embodiment of the present invention;
Figs. 6A through 6G are waveform charts for explaining an operation of the embodiment shown in Fig. 5;
Fig. 7 is another waveform chart for explaining an operation of the embodiment shown in Fig. 5;
Fig. 8 is an equivalent circuit diagram of an ultrasonic transmitter and ultrasonic receiver shown in Fig. 5;
Fig. 9 is a characteristic graph showing impedance characteristics of the ultrasonic transmitter and ultrasonic receiver shown in Fig. 5;
Fig. 10 is a partial longitudinal section view of an improved part of the structure of the embodiment shown in Fig. 5;
Fig. 11 is a longitudinal section view showing a concrete inside structure of the ultrasonic receiver shown in Fig. 10;
Fig. 12 is a characteristic graph for explaining changes of impedance characteristics accompanying to a fixation of a piezoelectric vibrator;
Figs. 13a and 13b are longitudinal section views showing other embodiments of the ultrasonic receiver shown in Fig. 5;
Fig. 14 is a transverse section view showing a structure improved so as to eliminate an influence of curvature of ultrasonic transmitting/receiving surface of the embodiment shown in Fig. 5;
Fig. 15 is a transverse section view for explaining an influence when a curvature of the measuring pipe line is large;
Fig. 16 is a characteristic graph for explaining a relationship between an incident angle to the measuring pipe line and energy distribution rate;
Fig. 17 is a transverse section view showing another structure improved so as to eliminate the influence of curvature of the ultrasonic transmitting/receiving surface of the embodiment shown in Fig. 5;
Figs. 18a, 18b and 18c are waveform charts for explaining a problem in separating noises by a time difference;
Fig. 19 is an explanatory drawing for explaining a propagation of ultrasonic signal within the measuring pipe line having a curvature;
Fig. 20 is a transverse section view showing a structure improved so as to reduce pipe line propagating waves propagating in the measuring pipe line;
Figs. 21a and 21b are transverse section views showing other structures improved so as to reduce the pipe line propagating waves propagating in the measuring pipe line;
Fig. 22 is a characteristic graph showing frequency vs. impedance characteristics in which frequencies in the thickness shear direction and thickness direction are taken into account;
Fig. 23 is a circuit diagram showing a structure of an oscillator whose part is improved from that of the oscillator shown in Fig. 5;
Fig. 24 is a circuit diagram showing another structure of an oscillator whose part is improved from that of the oscillator shown in Fig. 5;
Figs. 25a and 25b are graphs of frequency location for explaining frequency vs. impedance characteristics around resonant frequencies of the pair of ultrasonic transmitter and ultrasonic receiver;
Fig. 26 is a block diagram of an improved signal processing process of the embodiment shown in Fig. 5 which is not part of the present invention; Fig. 27 is a circuit diagram showing a concrete structure of a variable high-pass filter shown in Fig. 26;
Figs. 28a, 28b and 28c are waveform charts of each part of the circuit for explaining an operation of the circuit shown in Fig. 26; and
Fig. 29 is a structural drawing showing a structure of another embodiment of the present invention wherein a sensor section is modified.

### DETAILED DESCRIPTION OF PREFERRED EMBODIMENTS

Referring now to the drawings, embodiments of the present invention will be explained in detail. Fig. 5 is a block diagram showing a structure of one embodiment of the present invention.

A measuring pipe line 10 is made of stainless steel for example and flows a fluid to be measured. A vortex generator 11 is fixed in the diametric direction of the measuring pipe line 10 and has a trapezoidal cross section. An ultrasonic transmitter 12 is fixed on the outer wall of the measuring pipe line 10 on the downstream side of the vortex generator 11 in a state not contacting with the fluid to be measured. Further, an ultrasonic receiver 13 is disposed facing to the ultrasonic transmitter 12.

An oscillator 14 sends out an oscillating voltage Vₒₛ which continuously oscillates with about 1 to 2 MHz of oscillation frequency fₒₛ for example to a switch 15. ON/OFF of the switch 15 is controlled by a standard signal S₁ having a gate width W₁. It applies the oscillating voltage Vₒₛ to the ultrasonic transmitter 12 as a burst wave S_{B} which corresponds to the gate width W₁.

A damping circuit 16 is turned ON/OFF by this standard signal S₁ and terminates and quickly attenuates to zero level with a resistance a vibrating voltage V_{R} accompanying a slowly fluctuating residual vibration generated in the ultrasonic transmitter 12.

A standard timing circuit 17 generates the standard signal S₁ and gives a time standard for sampling signals. The switch 15 is turned on when this standard signal S₁ turns into a high level and the resistance in the damping circuit 16 is turned on when it turns into a low level. At the same time, the standard timing circuit 17 outputs the standard signal S₁ also to a sampling signal generating circuit 18.

The sampling signal generating circuit 18 receives the standard signal S₁ and outputs it as a sampling signal S₂ and reset signal S₃ by delaying a time T, which is determined by a function (L/C_{A}) of the inner diameter L of the measuring pipe line 10 and sound velocity C_{A} of the fluid to be measured, to the standard signal S₁.

Among them, the sampling signal S₂ has a predetermined gate width W₂ which corresponds to the gate width W₁ and the reset signal S₃ is output as a signal which resets in a very short time width to the gate width W₂.

On the other hand, an amplitude modulated signal S_{A} received by the ultrasonic receiver 13 is amplified by a preamplifier 19 and is output to a sampling circuit 20. The sampling circuit 20 samples only the amplitude modulated signal S_{A} which falls into the gate width W₂ of the sampling signal S₂ and outputs to a tuned amplifier 21.

The tuned amplifier 21 selects and amplifies the sampled amplitude modulated signal S_{A} and outputs to a peak detecting/half-wave circuit 22 in the next stage as a tuned signal Sₛ. Q-value of the tuned amplifier 21 is set to be lower than normal ones, i.e. around Q = 10 to 20 for example, to damp.

It is because waves are successively output exceeding the predetermined number of waves of the oscillation frequency fₒₛ contained in the gate width W₁ even if no burst wave is output, causing an inconvenience of influencing on the next signal processing if the Q-value is large.

The reset signal S₃ is applied to the peak detecting/half-value circuit 22 and a histogram which corresponds to an envelope of the tuned signal Sₛ is created by repetitively holding peak values of the tuned signal Sₛ and resetting for a short period of time just before the holding. After that, it is half-wave rectified to output as a half-wave rectified voltage S_{H}.

This half-wave rectified voltage S_{H} is output to a low-pass filter 23 having a high cut-off frequency to remove noise and others produced in the peak detecting/half-wave circuit 22 and is output to an active low-pass filter 24.

The active low-pass filter 24 is set at a low cut-off frequency. It removes noises contained in the vortex signal or low frequency noises such as a fluid noise and outputs to a Schmitt trigger circuit 25. The Schmitt trigger circuit 25 converts the vortex signal contained in the output of the active low-pass filter 24 to a pulse signal Sᵥ.

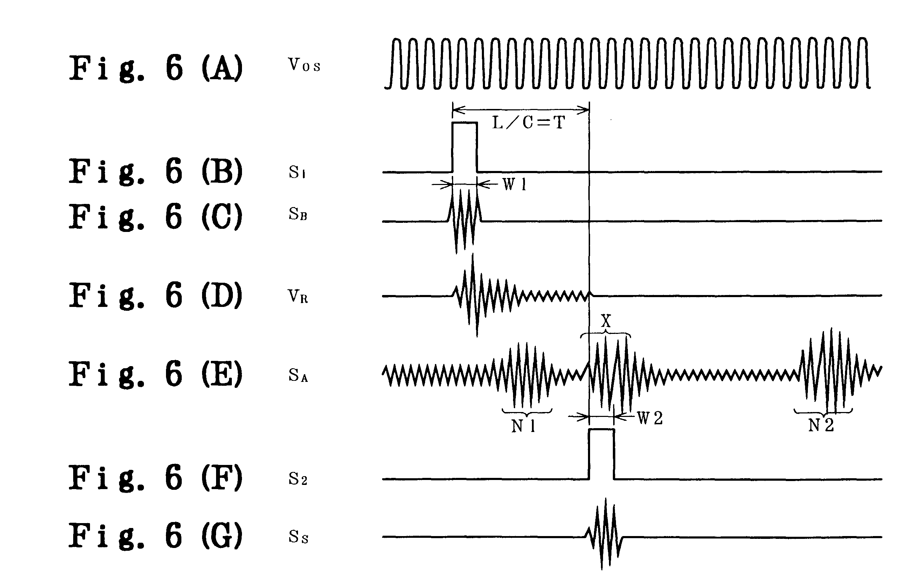

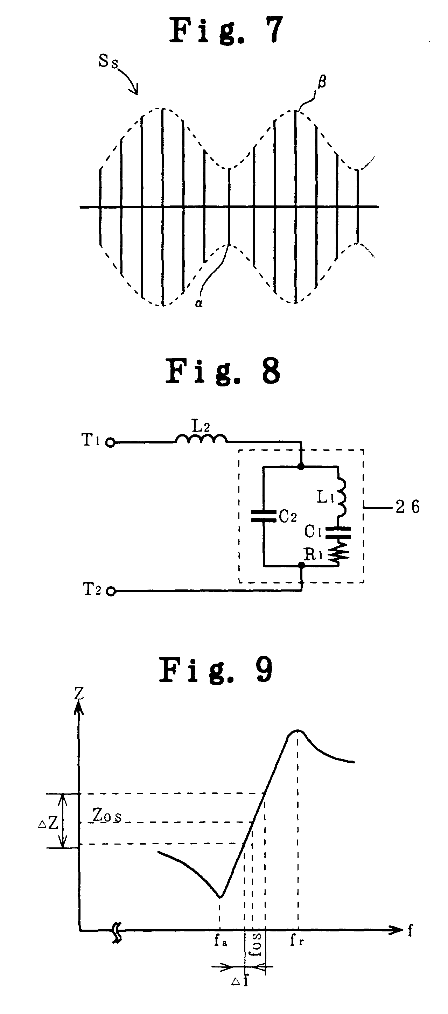

With reference to waveform charts shown in Figs. 6A through 6G and 7, an operation of the embodiment constructed as described above will be explained.

The oscillating voltage Vₒₛ (Fig. 6A) output from the oscillator 14 is turned on when the standard signal S₁ (Fig. 6B) is in high level and is turned off when the standard signal is in low level. The burst wave S_{B} shown in Fig. 6C is thus output to the ultrasonic transmitter 12.

Because a residual vibration exists in the vibrator composing the ultrasonic transmitter 12, the vibrating voltage V_{R} which mildly fluctuates as shown in Fig. 6D is brought about even if the burst wave S_{B} which exhibits a sharp change is applied to the ultrasonic transmitter 12.

If the period of the vibrating voltage V_{R} is prolonged. it lasts to a point of time for sending out a next burst wave S_{B}. In order to avoid it from happening, the ultrasonic transmitter 12 is terminated by a resistance in the period when the standard signal S₁ (Fig. 6B) is in low level in the damping circuit 16 to quickly converge the residual vibration.

As the burst wave S_{B} is applied to the ultrasonic transmitter 12, an ultrasonic wave is sent out from the ultrasonic transmitter 12 to vortices. The ultrasonic wave is frequency modulated by the vortex and is received by the ultrasonic receiver 13 as the amplitude modulated signal S_{A} (Fig. 6E).

In the amplitude modulated signal S_{A}, the noises (Fig. 6E) caused by the pipe line propagating wave N₁ propagating through the measuring pipe line 10 and by the standing wave N₂ formed by propagating between the inner walls of the measuring pipe line 10 as explained with reference to Fig. 6 are being mixed, beside the vortex signal component X which has been frequency modulated by the vortex.

Such amplitude modulated signal S_{A} is amplified by a predetermined times by the preamplifier 19 and is output to the sampling circuit 20. The sampling signal S₂ shown in Fig. 6F is applied to the sampling circuit 20 from the sampling signal generating circuit 18 and the amplitude modulated signal S_{A} is sampled by this sampling signal S₂.

The vortex signal component X exists at a point of time after a time T has elapsed from when the standard signal S₁ was sent out, and it is sampled by the sampling signal S₂ at this point of time. The sampled amplitude modulated signal S_{A} containing the vortex signal component X is amplified by the tuned amplifier 21 and is output at its output terminal as the tuned signal Sₛ shown in Fig. 6G.

Because the standard signal S₁ shown in Fig. 6B is sequentially sent out at predetermined time intervals, a waveform of the tuned signal as shown in Fig. 7 is formed when they are arranged in a time series manner. A portion which corresponds to the vortex signal component X for example is contained in this waveform. In this case, a part alpha indicates a case when the direction of the ultrasonic wave and that of a Karman vortex are opposite. A part beta indicates a case when the direction of the ultrasonic wave and that of a Karman vortex are the same. That is, it shows that the peak values and vortices correspond in one-to-one.

The tuned signal Sₛ thus obtained is output to the peak detecting/half-wave circuit 22. The reset signal S₃ is applied to the peak detecting/half-wave circuit 22 to create the histogram of the tuned signal Sₛ. The circuit 22 half-wave rectifies the tuned signal and outputs the half-wave rectified voltage S_{H} at its output terminal.

The noise in the half-wave rectified voltage S_{H} is removed by the low-pass filter 23 and active low-pass filter 24 and the half-wave rectified voltage S_{H} is output as the pulse signal Sᵥ which corresponds to the number of vortices at the output terminal of the Schmitt trigger circuit 25.

Next, conditions which allow the ultrasonic receiver 13 shown in Fig. 5 to largely and stably receive the amplitude modulated signal S_{A} will be explained below.

The propagation time τ₀ when there is no vortex is given by the expression (1). A propagation time τ₃ when there is a vortex is given as follows taking account of the expressions (2) and (3);${\text{τ}}_{\text{3}} {\text{= [d}}_{\text{v}} {\text{/(C}}_{\text{A}} {\text{+ V}}_{\text{A}} {\text{sin ω}}_{\text{v}} {\text{t)] + [(D - d}}_{\text{v}} {\text{)/C}}_{\text{A}} \text{]}$ where V_{A}sin ωᵥt is the fluid vibration of the vortex and V_{A} is a velocity of a circulating flow of the vortex.

Therefore, a phase change of the ultrasonic wave caused when the vortex passes is given as follows;${\text{d Φ = (τ}}_{\text{0}} {\text{- τ}}_{\text{3}} {\text{)ω}}_{\text{os}}$ where ωₒₛ (= 2π fₒₛ) is an oscillation angular frequency which the oscillating voltage Vₒₛ of the oscillator 14 has.

If the maximum phase shift is assumed to be Δ Φ here, the following expression is given from a relationship of C_{A}² » V_{A}²;${\text{Δ Φ = ±V}}_{\text{A}} {\text{d}}_{\text{v}} {\text{ω}}_{\text{os}} {\text{/C}}_{\text{A}} {}^{\text{2}}$

If the maximum frequency shift at this time is assumed to be Δ f_{MAX}, Δ f_{MAX} may be obtained as;${\text{Δ f}}_{\text{MAX}} {\text{= (Δ Φ) ' = 2V}}_{\text{A}} {\text{d}}_{\text{v}} {\text{ω}}_{\text{os}} {\text{/C}}_{\text{A}} {}^{\text{2}}$

On the other hand, while the ultrasonic receiver 13 comprises the piezoelectric vibrator, an equivalent circuit 26 in the neighborhood of a resonant frequency fₐ and antiresonant frequency fᵣ of the vibrator may be presented as a parallel circuit in which a capacitor C₂ is connected to a serial circuit of an inductance L₁, capacitor C₁ and a resistance R₁ in parallel as shown by surrounding by the dotted line in Fig. 8.

An inductance L₂ for widening band is connected to the parallel circuit in series and the circuit is pulled out to terminals T₁ and T₂. An impedance Z seen from the terminals T₁ and T₂ becomes minimum at the resonant frequency fₐ and maximum at the antiresonant frequency fᵣ as shown in Fig. 9.

In these frequency areas, changes of the impedance Z greater than those in other frequency areas are seen. Accordingly, a large impedance change ΔZ may be obtained by setting the value of the oscillating frequency fₒₛ in between the resonant frequency fₐ and the antiresonant frequency fᵣ.

As a result, the amplitude modulated signal having a large amplitude modulated by the vortex may be obtained at the output terminal of the ultrasonic receiver 13. The same also applies to the amplitude modulated signal S_{A} shown in Fig. 6E obtained when it is a burst wave.

By the way, while Fig. 8 shows the structure in which the inductance L₂ is inserted to the vibrator of the ultrasonic receiver 13 in series, this structure is a case when the band is widened in a way of lowering the resonant frequency fₐ. Such structure allows the operation range of the oscillation frequency fₒₛ (fₐ to fᵣ) to have a room to changes of the frequencies fₐ and fᵣ which are caused by changes of temperature.

Further, if the oscillation frequency fₒₛ is selected as a resonant frequency of the ultrasonic transmitter 12 on the transmission side, the ultrasonic wave may be irradiated to the fluid to be measured from the oscillator 14 with a maximum efficiency. It is useful in maintaining a stable operation to select the value of the oscillation frequency for each ultrasonic transmitter and ultrasonic receiver taking account of the resonant frequency thereof.

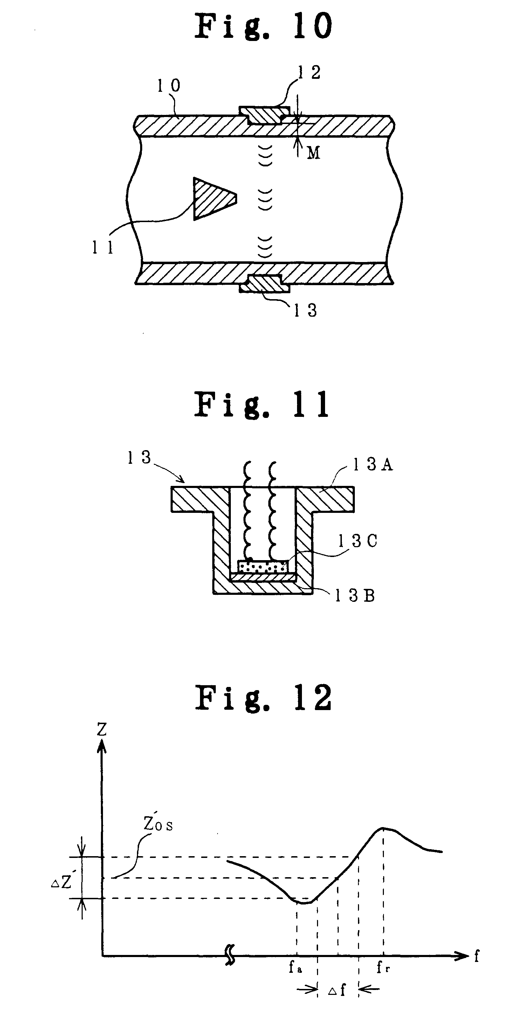

Now the improvement of detecting sensitivity of the embodiment shown in Fig. 5 will be explained. Fig. 10 is a partial longitudinal section view showing an exemplary structure for mounting the ultrasonic transmitter and ultrasonic receiver shown in Fig. 5. A thickness M of the section for mounting the ultrasonic transmitter 12 and ultrasonic receiver 13 to the measuring pipe line 10 is selected to be M ≒ λ/2 (λ is a wavelength of the ultrasonic wave within the measuring pipe line 10) so that the ultrasonic wave is transmitted in maximum at this time.

Fig. 11 is a longitudinal section view showing a concrete inside structure of the ultrasonic transmitter 12 and ultrasonic receiver 13 shown in Fig. 10. The ultrasonic receiver 13 will be exemplified here. A case 13A of the ultrasonic receiver 13 is formed into a cylindrical shape with a flange and is made of stainless steel for example. A piezoelectric vibrator 13C is bonded to the bottom part of the case 13A through a disc shape silicon rubber 13B.

By bonding the vibrator elastically using the silicon rubber and the like, the both ends of the piezoelectric vibrator have the similar impedance characteristics with that of a free simple substance and exhibits a sharp impedance change as described with reference to Fig. 9.

Contrary to that, if the piezoelectric vibrator 13C is adhered to the case 13A using an epoxy resin for example, a coupling with a load is densified and the impedance characteristic thereof shows a flat characteristic as a whole as shown in Fig. 12.

As a result, an impedance change due to the frequency shift of the ultrasonic wave caused by the vortex becomes small, leading to the degradation of the detecting sensitivity. It happens because the resistance R₁ representing a loss in Fig. 10 increases depending mainly on a state of acoustic load.

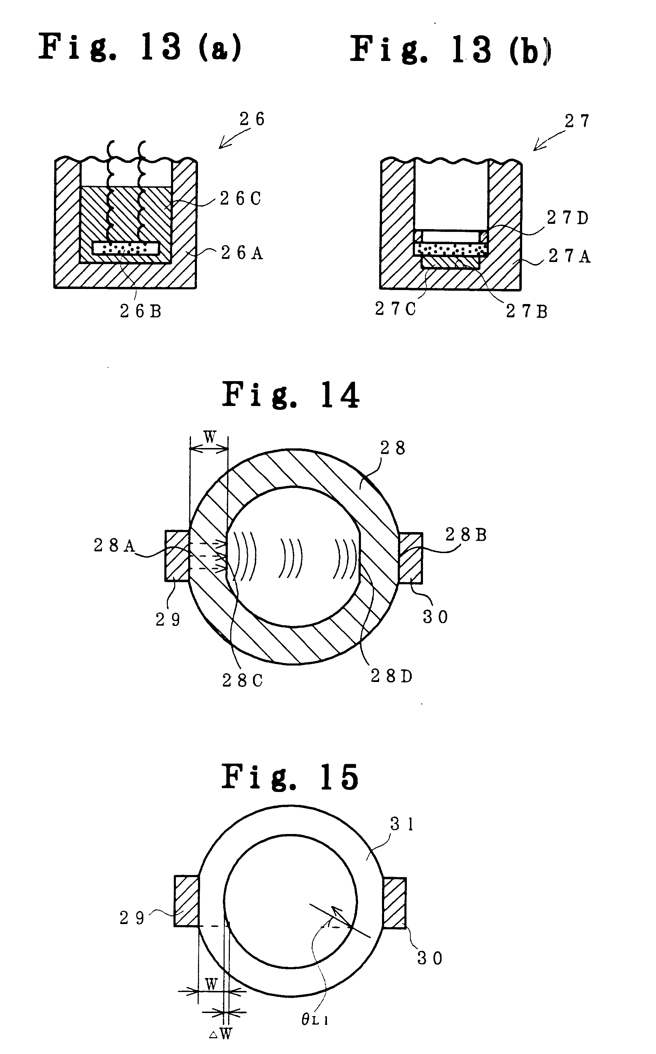

Figs. 13a and 13b are longitudinal section views showing other embodiments of the ultrasonic receiver shown in Fig. 11. Fig. 13a shows a case when the whole piezoelectric vibrator is covered by an elastic body and Fig. 13b shows a case when part of the piezoelectric vibrator is fixed, respectively.

An ultrasonic receiver 26 is what a piezoelectric vibrator 26B is stored in a cylindrical case 26A made of stainless steel covering the whole with the silicon rubber 26C to reduce the acoustic load.

An ultrasonic receiver 27 is constructed so as to reduce the acoustic load by creating a cylindrical concave section 27B at the bottom of a cylindrical case 27A made of stainless steel to store a silicon rubber therein, by placing a disc shape piezoelectric vibrator 27C thereon and by fixing the periphery of the piezoelectric vibrator 27C with a ring 27D.

By the way, although the vibrator is coupled using the silicon rubber as the elastic body in the description above, the present embodiment is not confined only to the silicon rubber and the acoustic load may be reduced using another elastic body.

Next, an influence of a curvature of the measuring pipe line in the embodiment shown in Fig. 5 will be explained. Fig. 14 is a transverse section view showing a structure improved so as to eliminate an influence of curvature of ultrasonic transmitting/receiving surface of the embodiment shown in Fig. 5.

A measuring pipe line 28 is created so that fixing surfaces 28A and 28B on which an ultrasonic transmitter 29 and ultrasonic receiver 30 are fixed and transmitting and receiving surfaces 28C and 28D on the inner wall of the measuring pipe line 28 parallel to the fixing surfaces become parallel from each other.

The transmission and receiving efficiency may be improved by forming the measuring pipe line 28 so that those surfaces become parallel. If each interval W between the surfaces 28A and 28C and 28B and 28D is selected to be W = n (λ/2) (n: positive integer, λ: wavelength) in case of a continuous wave for example, it may be transmitted without reflection. This selection is effective also when using the burst wave like the present embodiment.

In case of a measuring pipe line having a small bore diameter in particular, because a curvature of a measuring pipe line 31 is large as shown in Fig. 15 and a difference of the intervals W (ΔW/W) is relatively large at the center and edge portions of the transmitting surface, an ultrasonic signal transmitted to the fluid to be measured becomes small.

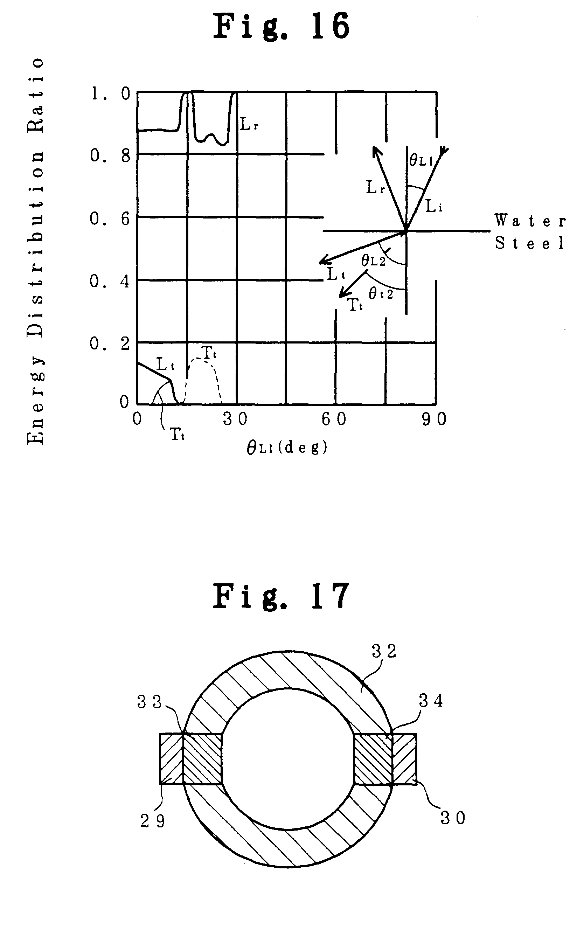

On the other hand, there is a fear that the ultrasonic may be totally reflected at the edge portion in receiving it if an incident angle θ_{L1} is too large. Fig. 16 is a characteristic graph for explaining this point.

Fig. 16 is a characteristic graph for explaining a relationship between the incident angle of the ultrasonic signal and the energy distribution ratio when the ultrasonic signal is input from the fluid to be measured when it is water and is received on the side of the measuring pipe line 31 which is presumed to be steel.

As shown in Fig. 16, the most of the ultrasonic signal input as a longitudinal wave with θ _{L1} of incident angle is reflected at the boundary surface as a reflected wave Lᵣ, a longitudinal wave component Lₜ having an angle of refraction of θ_{L2} and transverse wave Tₜ having an angle of refraction of θₜ₂ are both generated as transmitted waves. What can be used among them is only the longitudinal wave component Lₜ whose incident angle is up to about 15° and no energy is distributed above that.

Taking the aforementioned points into consideration, it is effective to dispose the piezoelectric vibrators composing the ultrasonic transmitter and ultrasonic receiver so as to have the long fixing surfaces in the axial direction of the measuring pipe line especially in the case of the pipe line having a small bore diameter.

It is also possible to efficiently transmit/receive the ultrasonic signal by providing a pair of through holes on a measuring pipe line 32 and by fixing the ultrasonic receiver 29 and ultrasonic receiver 30 thereon through adapters 33 and 34 having flat transmitting/receiving surfaces as shown in Fig. 17.

Next, the reduction of the influence of noise in the embodiment shown in Fig. 5 will be explained. As described with reference to Fig. 4, when the pair of ultrasonic transmitter and ultrasonic receiver are mounted on the measuring pipe line in a manner of clamping-on, the ultrasonic wave as noise which propagates through the measuring pipe line and reaches to the ultrasonic receiver exists beside that irradiated into the fluid to be measured.

The ultrasonic noise which passes through the measuring pipe line and the ultrasonic signal which propagates through the fluid to be measured are separated by utilizing a time difference caused by differences of the propagation distance and sound velocity of the ultrasonic waves as shown in Fig. 6.

In the waveform charts shown in Fig. 6, while the pipe line propagating wave N₁ approaches to the vortex signal component X, the degree of this approach depends on the size (mainly thickness and curvature of inner surface, etc.) of the measuring pipe line which differs depending on the bore diameter and pressure standard, etc. The sampling period has to be shortened especially in case of a measuring pipe line having a small bore diameter and having a high vortex frequency.

If the sampling period, i.e. the period of burst wave, is shortened, there is a merit that the vortex signal may be reproduced favorably when reproducing it from the amplitude modulated wave of the envelope shown in Fig. 5.

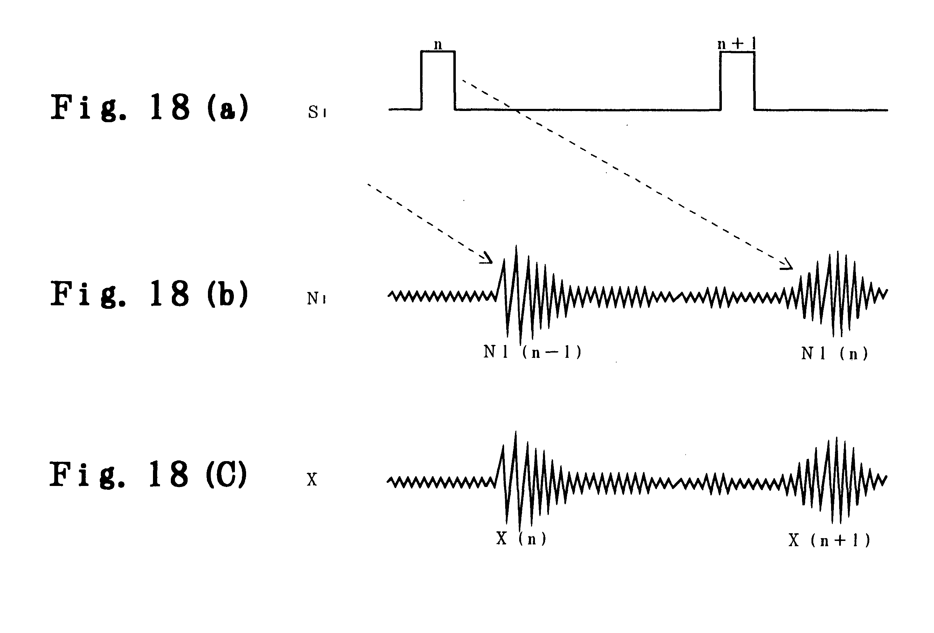

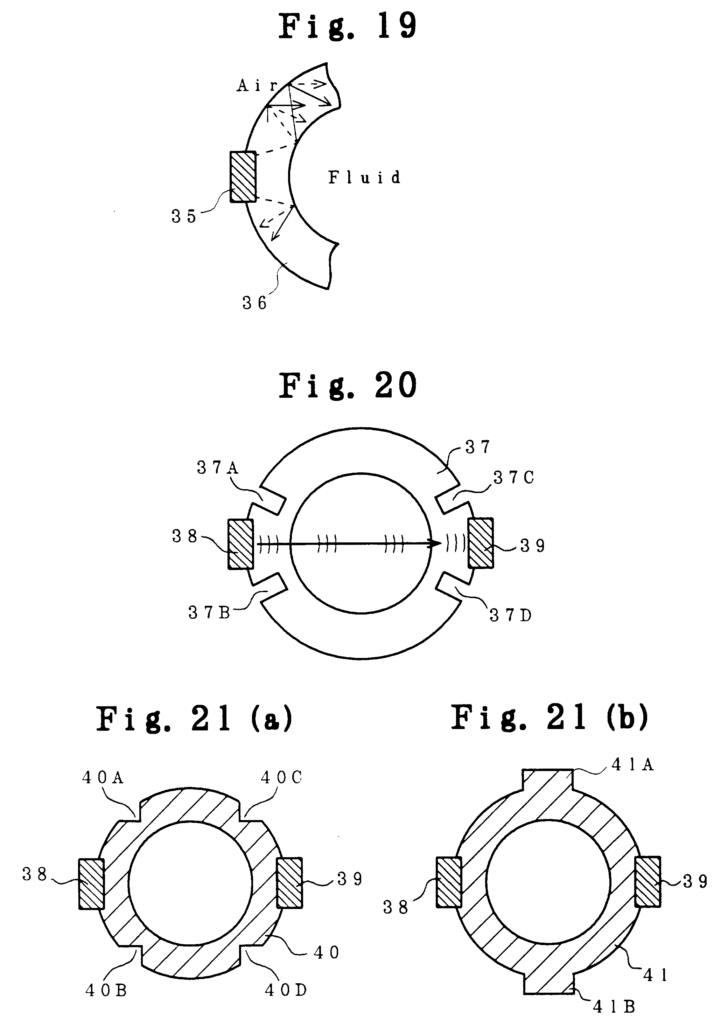

However, there arises an overlap or approach between the preceding pipe line propagating wave N₁ (n - 1) (Fig. 18b) and the next vortex signal component X (n) (Fig. 18c) for the (n - 1)th, n-th and (n + 1)th standard signals S₁ (Fig. 18a) sent out as shown in Fig. 19 and it is difficult to separate the noise by processing just by the time difference.

Furthermore, the pipe line propagating wave N₁ travels in the measuring pipe line having a directionality. When the fluid to be measured is water, about 93% of it is reflected by the boundary surface of the pipe line and the reflected wave thereof is combined with next ultrasonic. It again travels within the pipe and is reflected again. This is repeated for a period of time in which the number of waves of the burst wave exist.

This phenomenon is brought about when a plane wave ultrasonic is input to the boundary surface and if the boundary surface has a curvature, the ultrasonic signal transmitted from the ultrasonic transmitter 35 spreads while reflecting between the inner and outer walls as shown in Fig. 19.

Furthermore, beside the irradiated longitudinal wave, a transverse wave is generated within the measuring pipe line 35. Because the longitudinal wave has about 5900 m/s of sound velocity and transverse wave has about 3230 m/s of sound velocity, it is difficult to accurately predict the time when the pipe line propagating waves arrive at the ultrasonic receiver. Beside that, a sound velocity of the ultrasonic signal transmitted into the fluid to be measured largely differs depending on the type of the fluid, temperature and others.

Then if the influence of the pipe line propagating wave N₁ can be reduced, the gate width of the sampling signal S₂ (Fig. 6F) may be widened and as a result, it brings about such merits that adjustments required owing to the fluid conditions become unnecessary and the sampling may be stabilized even if the sound velocity changes.

Figs. 20 and 21 are transverse section views showing structures improved so as to reduce the pipe line propagating waves propagating in the measuring pipe line. In the case of Fig. 20, deep grooves 37A through 37D are provided on both sides of the ultrasonic transmitter 38 and ultrasonic receiver 39 along the axis of the pipe line. By providing reflecting surfaces by the deep grooves 37A through 37D, the most of the pipe line propagating wave N₁ is reflected with them and a level of the noise traveling from the ultrasonic transmitter 38 and arriving at the ultrasonic receiver 39 passing through a measuring pipe line 37 is remarkably reduced.

While the reflecting surfaces are made up by the four deep grooves in the case of Fig. 20, the same effect may be expected when the number of grooves is increased when the grooves are shallow. It is also possible to provide a plurality of concave and convex portions on the surface of the measuring pipe line 37, not making up the reflecting surfaces only with the grooves.

Among those pipes shown in Fig. 21a and 21b, the one shown in Fig. 21a is provided with L-shaped notches 40A through 40D as reflecting surfaces at the four corners of a measuring pipe line 40. The one shown in Fig. 21b is provided with convex portions 41A and 41B respectively at the upper and lower surfaces of a measuring pipe line 41.

Next, an influence of bubbles in the embodiment shown in Fig. 5 will be explained. In the embodiment shown in Fig. 5, the ultrasonic signal may be remarkably attenuated and a sufficient sensitivity cannot be obtained depending on a size of bubbles when they are contained in the fluid to be measured. This point will be explained below.

When the fluid to be measured is a liquid, the ultrasonic wave is scattered and absorbed if particles or bubbles having an acoustic impedance different from that of the fluid to be measured exist in the fluid. Especially when the bubbles are put into a resonant state, a remarkable attenuation is brought about and it becomes difficult to receive the ultrasonic signal.

A resonant frequency fᵣ of the bubble differs depending on the diameter thereof (a: radius, cm) and it is presented by fᵣ = 326/a (Hz) under the normal temperature and pressure. Accordingly, it is necessary to select the frequency fₒₛ of the ultrasonic wave to be used with which the bubbles will not resonate.

When a titanate-lead zirconate ceramic (PZT) is used for the piezoelectric vibrator, there are vibration modes in the thickness direction and in the thickness shearing direction as vibration modes in which the longitudinal wave ultrasonic signal is efficiently irradiated into the fluid to be measured and their frequency ratio is about two to one. Therefore, if the thickness direction is 1 MHz, the thickness shearing direction is 500 kHz.

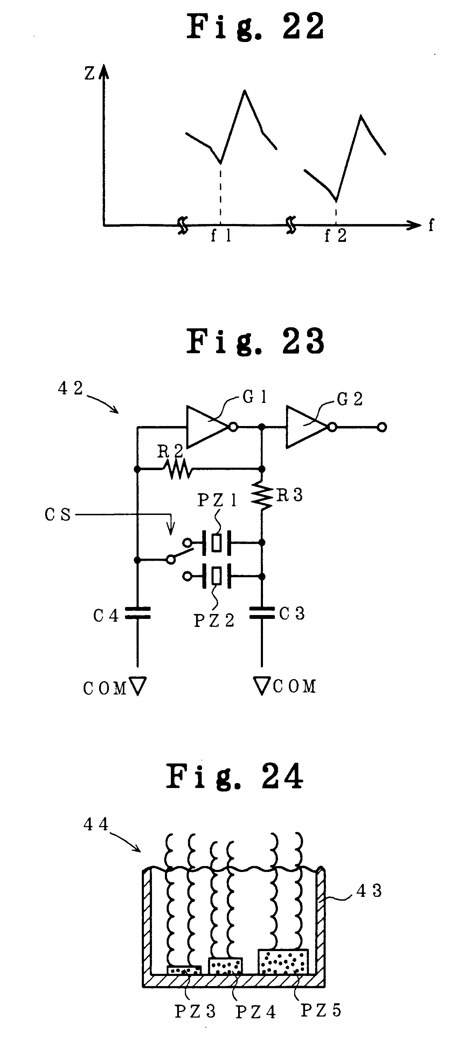

Fig. 22 is a characteristic graph showing frequency vs. impedance characteristics taking account of frequencies in the thickness shearing direction and thickness direction. Portions which exhibit a sharp impedance change exist around a resonant frequency f₁ in the thickness shearing direction and a resonant frequency f₂ in the thickness direction.

While the changes of impedance characteristics of the piezoelectric vibrator used in the ultrasonic receiver 13 is utilized in the embodiment shown in Fig. 5, there is a portion which exhibits the sharp impedance change near the thickness shearing resonant frequency f₁ as shown in Fig. 22 and there is no problem concerning to the signal processing even if this portion is used.

Then instead of the oscillator 14 shown in Fig. 5, an oscillator 42 shown in Fig. 23 may be adopted. In the oscillator 42, inverters G₁ and G₂ are connected in series, a resistance R₂ is connected between input and output terminals of the inverter G₁ and the output terminal of the inverter G₁ is connected to a common potential point COM through the intermediary of a resistance R₃ and capacitor C₃. The input terminal of the inverter G₁ is connected to a common potential point COM through the intermediary of a capacitor C₄ and a piezoelectric vibrator PZ1 for vibrating in the thickness direction and a piezoelectric vibrator PZ2 for vibrating in the thickness shearing direction are connected through the intermediary of a switch SW which is changed over by a change-over signal CS between the capacitors C₃ and C₄. The influence of the bubbles may be eliminated by switching those vibrators by the change-over signal CS.

In this case, the tuned frequency of the tuned amplifier 21 in Fig. 5 may be arranged so as to be changed over corresponding to the change-over signal CS or to have flat frequency characteristics between them.

While the arrangement for reducing the influence of bubbles by switching the vibration modes of the piezoelectric vibrators has been explained with reference to Fig. 23, the same effect may be obtained by storing a plurality of pairs of piezoelectric vibrators PZ3, PZ4 and PZ5 having different vibration frequencies, i.e. different thicknesses, to structure an ultrasonic transmitter 44 and by switching them depending on diameters of the bubbles.

Next, a general improvement of the transmitting/receiving efficiency in the embodiment shown in Fig. 5 will be explained. Because the embodiment shown in Fig. 5 is constructed so as to convert the frequency modulation caused by the vortex into the amplitude modulation by utilizing the sharp section of the impedance characteristics of the piezoelectric vibrators used in the ultrasonic transmitter and ultrasonic receiver, the efficiency of the ultrasonic transmitter 12 and ultrasonic receiver 13 is reduced if the same piezoelectric vibrator is used in them.

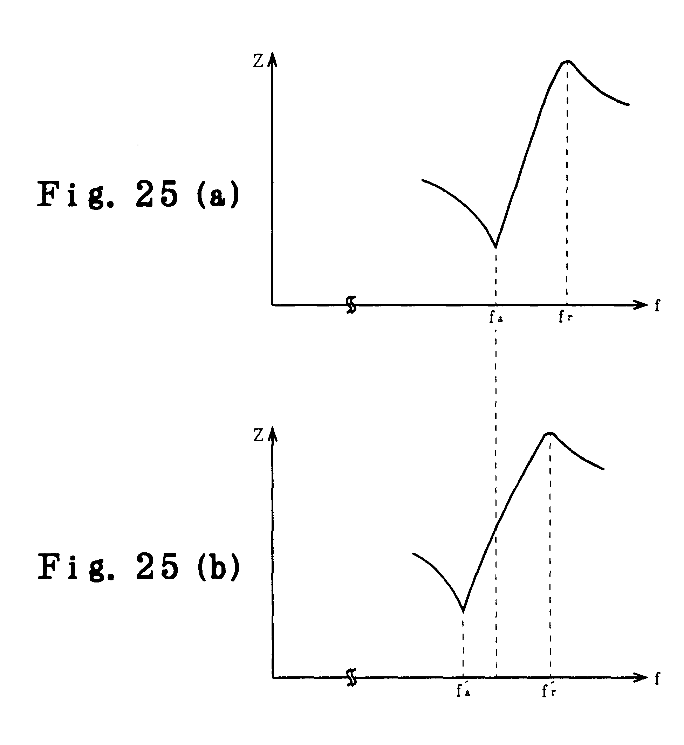

Then an arrangement for solving this problem will be explained using the frequency vs. impedance characteristics shown in Figs. 25a and 25b. Fig. 25a shows the characteristics of the ultrasonic transmitter and Fig. 25b shows the characteristics of the ultrasonic receiver, respectively.

The equivalent circuit around the resonant point of the piezoelectric vibrators used in those ultrasonic transmitter and ultrasonic receiver is denoted by the reference numeral (26) in Fig. 8. The resonant frequency fₐ and antiresonant frequency fᵣ on the transmission side shown in Fig. 25a at this time may be presented respectively as follows;${\text{f}}_{\text{a}} {\text{= 1/2π (L}}_{\text{1}} {\text{* C}}_{\text{1}} {\text{)}}^{\text{1/2}}$${\text{f}}_{\text{r}} {\text{= 1/2π [L}}_{\text{1}} {\text{* C}}_{\text{1}} {\text{* C}}_{\text{2}} {\text{/(C}}_{\text{1}} {\text{+ C}}_{\text{2}} {\text{)]}}^{\text{1/2}}$ Similarly, the resonant frequency fₐ' and antiresonant frequency fᵣ' on the receiving side are presented in Fig. 25b.

At this time, in order to cause the ultrasonic transmitter to irradiate a large ultrasonic signal, the driving oscillation frequency fₒₛ output from the oscillator 14 is selected to be equal to the resonant frequency of the piezoelectric vibrator used for the ultrasonic transmitter. The characteristics at this time is the characteristics shown in Fig. 25a.

On the other hand, the receiving sensitivity of the piezoelectric vibrator used for the ultrasonic receiver may be improved by selecting so that the resonant frequency fₐ of the piezoelectric vibrator on the transmission side comes to the portion between the resonant frequency fₐ' and the antiresonant frequency fᵣ' in which a sharp impedance change is exhibited as shown in Fig. 25b.

Putting those described above together, the selection is made so that the driving oscillation frequency fₒₛ output from the oscillator 14 becomes equal to the resonant frequency fₐ of the piezoelectric vibrator for the ultrasonic transmitter and so that this resonant frequency fₐ comes between the resonant frequency fₐ' and antiresonant frequency fᵣ' of the piezoelectric vibrator used for the ultrasonic receiver.

The resonant frequency of the piezoelectric vibrator may be readily altered by changing the thickness of the piezoelectric vibrator when the vibration in the thickness direction is used for example. Thereby the best transmission/receiving efficiency may be achieved as a whole, facilitating the signal processing and contributing to the stabilization of the operation as a result.

Furthermore, because the power required for driving may be less when the receiving signal is kept in a constant level to the contrary, it is effective for a case when a power consumption is restricted like an industrial field transmitter driven by 4 mA of current.

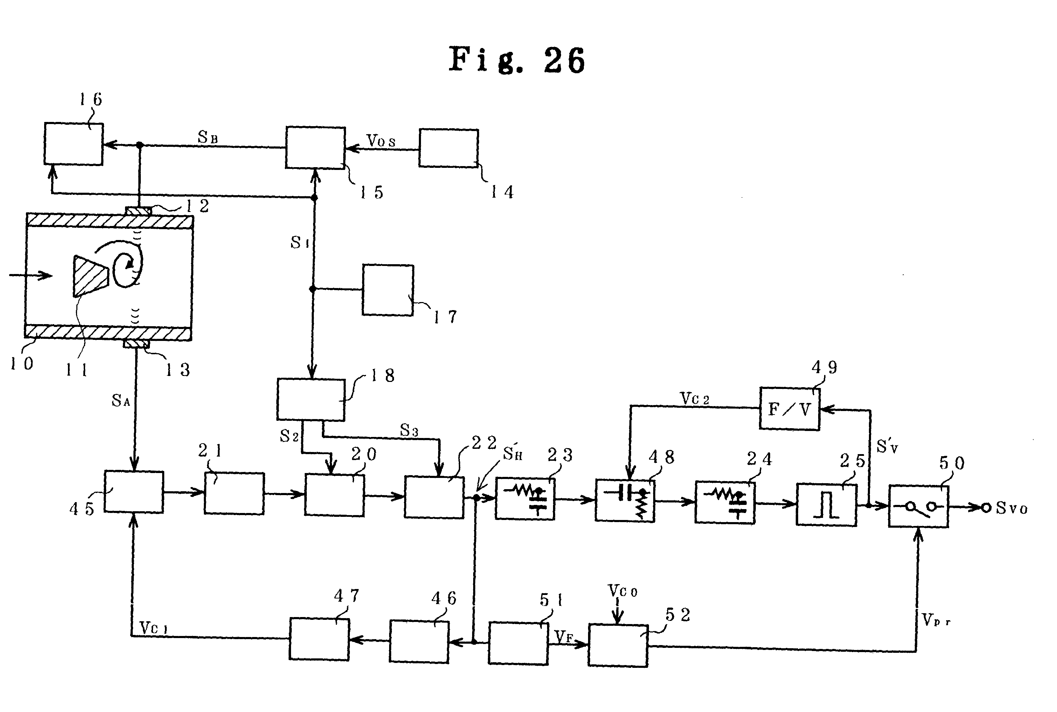

Next, additional signal processing processes necessary for applying the embodiment shown in Fig. 5 to actual products will be explained. Fig. 26 is a block diagram of an improved signal processing process of the embodiment shown in Fig. 5.

In this signal processing process, functions necessary for maintaining a long term reliability and for dealing with phenomena encountered in the application are added to the embodiment shown in Fig. 5 but are not part of the invention of this application. In the description below, components having the same function with those shown in Fig. 5 are denoted with the same reference numerals and the explanation thereof will be omitted.

The oscillating voltage Vₒₛ from the oscillator 14 is sent out to the ultrasonic transmitter 12 as the burst wave S_{B} in response to the standard signal S₁ and is received by the ultrasonic receiver 13 after being modulated by a vortex as the amplitude modulated signal S_{A}.

The amplitude modulated signal S_{A} is output to an automatic gain amplifier 45 in which a gain is adjusted by a control signal V_{C1} and after that, is output as the half-wave rectified voltage S_{H}' at the output terminal of the peak detecting/half-wave circuit 22 via the tuned amplifier 21, sampling circuit 20 and peak detecting/half-wave circuit 22 having the same functions with those circuits shown in Fig. 5.

The half-wave rectified voltage S_{H}' is output to a gain control terminal of the automatic gain amplifier 45 as the control signal V_{C1} via a time constant circuit 46 and DC amplifier 47 to control the gain thereof. Then the half-wave rectified voltage S_{H}' is also output to the low-pass filter 23 and a variable high-pass filter 48.

On the other hand, a control signal V_{C2} is input to the variable high-pass filter 48. Thereby the corner frequency thereof is modified and is output to the active low-pass filter 24. It is then pulsed in the Schmitt trigger circuit 25 and is output as a pulse signal Sv' at the output terminal thereof.

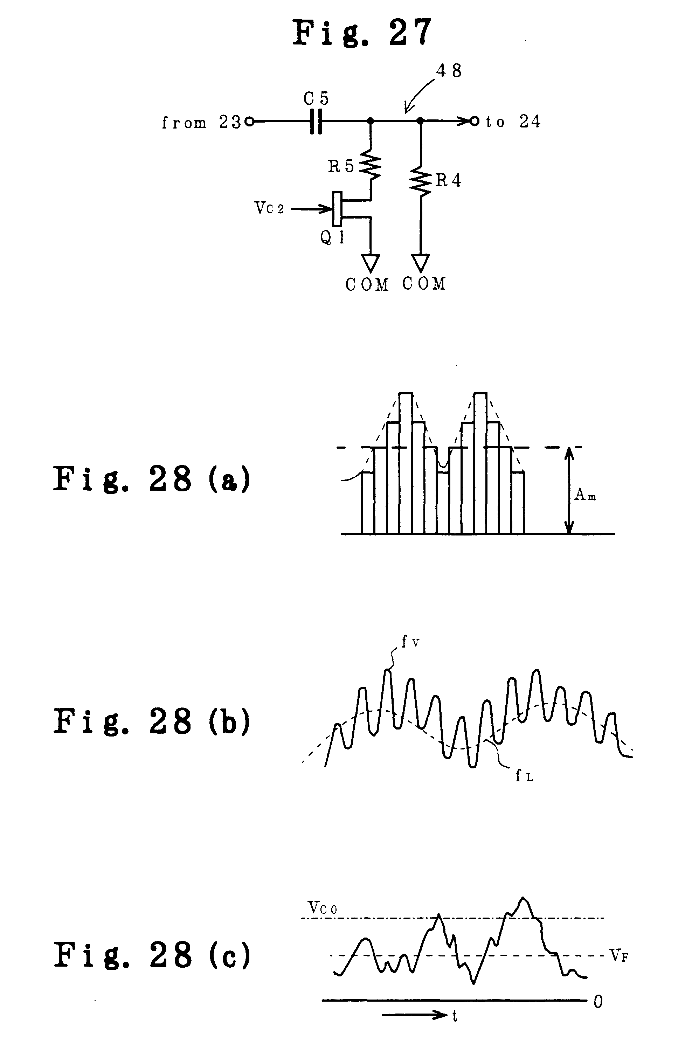

Fig. 27 shows one example of a concrete structure of the variable high-pass filter 48. The output of the low-pass filter 23 is input to one end of a capacitor C₅ and the other end thereof is connected to the active low-pass filter 24.

The other end of the capacitor C₅ is connected to a common potential point COM via a resistance R₄ and to a common potential point COM via a serial circuit composed of a field effect transistor Q₁ whose internal resistance is controlled by the control voltage V_{C2} and a resistance R₅. The corner frequency in the high-pass filter is modified by this control voltage V_{C2}.

Further, the pulse signal Sᵥ' is converted into the analog control signal V_{C2} by a F/V (frequency/voltage) converter 49 to control the corner frequency in the variable high-pass filter 48 and outputs a pulse signal S_{V0} which corresponds to the number of vortices at an output terminal of a switch 50 via the switch whose opening/closing is controlled by a protection signal Vₚᵣ.

The half-wave rectified voltage S_{H}' is also filtered by a time constant circuit 51 and becomes a filtered signal V_{F} which is output to a comparator 52. The comparator 52 compares this filtered signal V_{F} with a comparison signal V_{CO} to output the protection signal Vₚᵣ at its output terminal to open/close the switch 50 therewith.

With reference to Fig. 28, operations of the additional functions of the embodiment constructed as described above will be explained.

At first the function of the automatic gain amplifier 45 will be explained. The fluctuation in the level of receiving caused by elapsed changes, temperature characteristics and others of the piezoelectric vibrators or that caused by acoustic impedance of the fluid to be measured or particles and bubbles lead to a change of detecting efficiency in the peak detecting/half-wave circuit 22.

Then the gain of the automatic gain amplifier 45 is controlled by the control voltage V_{C1} (which corresponds to Aₘ) obtained by filtering the half-wave rectified voltage S_{H}' (Fig. 28a) by the time constant circuit 46 to keep an amplitude of the voltage input to the peak detecting/half-wave circuit 22 constant.

Next, the function of the variable high-pass filter 48 will be explained. When the fluid to be measured has high flow velocity, a low frequency noise frequency f_{L} called a "fluctuation noise" appears superimposing with the vortex frequency fᵥ. It causes an error when the vortex frequency fᵥ is pulsed by the Schmitt trigger circuit 25. Then, when the flow velocity is high (i.e. when the vortex frequency is high), the corner frequency is increased by the control signal V_{C2} to reduce the low frequency noise component.

Next, the function of the output protecting circuit will be explained. The protecting circuit is composed of the time constant circuit 51, comparator 52, switch 50 and others.

The output largely fluctuates in the receiving level at the beginning of feeding of fluid or when it is stopped due to the remaining air or air which flows in. Further, because the gain of the circuit is large when there exist no fluid, noises which are irrelevant to the vortex frequency are apt to be superimposed with the half-wave rectified voltage S_{H}' in the peak detecting/half-wave circuit 22.

In such a case, the vortices are not adequately emitted and normally the output becomes zero in a method other than the ultrasonic detecting method. In the case of the embodiment shown in Fig. 5, the receiving level sharply drops. By the way, because the change at this time takes place abruptly, a time constant of the time constant circuit 51 is set to be smaller than that of the time constant circuit 46.

Taking the aforementioned points into consideration, the stability is improved by taking out the half-wave rectified voltage S_{H}' as the filtered signal V_{F} through the time constant circuit 51, by comparing the filtered signal V_{F} in the comparator 52 which is set at the predetermined comparison signal V_{CO} as shown in Fig. 28c and by turning off the switch 50 by the protecting signal Vₚᵣ when the filtered signal V_{F} drops below this comparison signal V_{CO}.

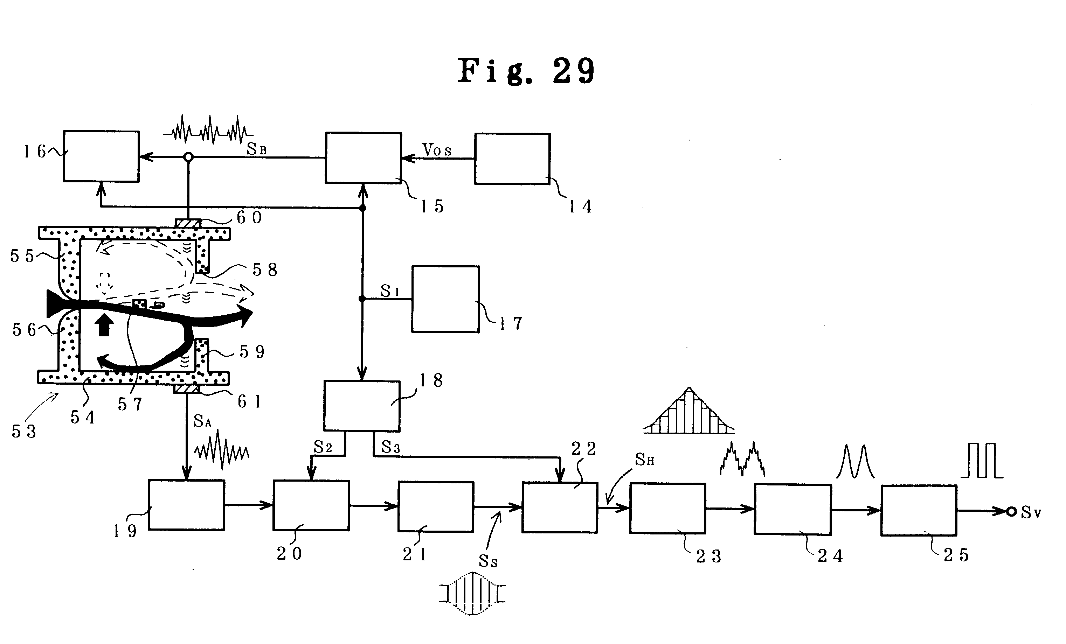

Fig. 29 is a structural drawing showing a structure of another embodiment of the present invention wherein a sensor section is modified. A fluid vibration (fluidic) sensor is used for the sensor section 53 in this embodiment. Because the circuit part other than the sensor section is the same with that shown in Fig. 5, the explanation will be made centering on the sensor section 53 below.

A through hole is bored at the center part of a block plate 56 which functions as a nozzle 55 on the upstream side of a metallic measuring pipe line 54 and a target 57 is fixed at a position in the pipe line where a jet of the fluid to be measured jetted through this nozzle 55 hits. A block plate 59 having a through hole 58 larger than the nozzle 55 more or less is provided on the downstream side of the target 57 to block the measuring pipe line 54. An ultrasonic transmitter 60 and ultrasonic receiver 61 are disposed facing each other on the outer wall of this measuring pipe line 54.

The fluid to be measured hits the target 57 on the downstream side as the jet through the nozzle 55 and flows toward the under side of the target 57 (shown by the black painted flow line in the figure) for example as its flow path is changed. This flow hits the wall of the block plate 59. It is fed back to the block plate 56 side as an under side feed back flow and pushes up the jet from the nozzle 55 toward the opposite direction (as shown by the black painted arrow in the figure).

As a result, the jet flows toward the upper side of the target 57 (shown by the flow line indicated by the dotted line in the figure). This flow hits to the wall of the block plate 59. It is fed back to the block plate 56 side as an upper side feed back flow and pushes down the jet from the nozzle 55 toward the opposite direction (as shown by the arrow indicated by the dotted line in the figure).

Then the jet moves toward the under side of the target 57 this time, returning to the first action. This action is repeated thereafter, causing a fluid vibration. Then a burst wave is irradiated to this fluid vibration from the ultrasonic transmitter 60 and an ultrasonic signal modulated by this fluid vibration is received by the ultrasonic receiver 61. After that, the signal processing shown in Fig. 5 5 is carried out to output the number of fluid vibrations, i.e. a vibration frequency fᵥ.

This vibration frequency fᵥ has a relationship of fᵥ = KQ (K: constant) with a flow rate Q of a fluid to be measured in a wide range of Reynolds number and it allows to construct a flowmeter having excellent characteristics in case of low Reynolds number, i.e. a low flow rate.

By the way, although the example in which the ultrasonic transmitter 60 and ultrasonic receiver 61 are fixed in a manner of clamping-on the measuring pipe line 54 on the slightly upstream side of the block plate 59 has been shown with reference to Fig. 29, the positions of those ultrasonic transmitter 60 and ultrasonic receiver 61 are not confined only to those described above and they may be disposed so that the propagation path of the ultrasonic agrees with the position where the fluid vibration is generated.

As concretely described above with reference to the embodiments, the present invention has the following effects.

According to the invention, the ultrasonic wave is intermittently transmitted to the Karman vortex as the burst wave and the signal is sampled only in the neighbor of point of time when the signal modulated by the Karman vortex appears, so that the flow rate may be measured without being influenced by the noise existing as a standing wave within the measuring pipe line. The present invention is suitable especially to liquid as the fluid to be measured and without being influenced by the vibration of the pipe, allows to measure a low flow velocity.

Because the ultrasonic transmitter and ultrasonic signal are clamped on, those part do not contact with the fluid to be measured, thereby causing no leak of the fluid to be measured from this part. It contributes to the improvement of the reliability and has an effect that the maintenance can be made on-line.

According to the embodiment described in Claim 3, such effects that a linearity may be obtained in a wide range of Reynolds number and a fluid vibrating flowmeter having good flow rate characteristics especially in low Reynolds number, i.e. in low flow rate range, may be obtained in addition to the effects described with reference to Claim 1.

According to the embodiment described in Claim 4, the tuned amplifier having a low Q value is provided in the signal processing circuit, so that the ultrasonic signal may be adequately selected and amplified and such an inconvenience that waves are successively output exceeding the predetermined number of waves of the oscillating frequency contained in the gate width W₁ thereby influencing on the next signal processing.

According to the embodiment described in Claim 5, the oscillation frequency is set at the portion where impedance change of the ultrasonic receiver is large, so that the vortex signal may be efficiently received.

According to the embodiment described in Claim 6, the structure of the ultrasonic transmitter is modified so that its oscillation frequency is equal to the resonant frequency of the ultrasonic transmitter in addition to the structure of the invention described in Claim 5, so that the vortex signal may be more efficiently received.

According to the embodiment described in Claim 7, the ultrasonic vibrators are fixed in the holder of the ultrasonic transmitter and ultrasonic receiver through the intermediary of the elastic body, the detecting sensitivity may be prevented from dropping accompanying to the fixation of the ultrasonic vibrator and the authentic detecting sensitivity may be brought about.

According to the embodiment described in Claim 8, the inner walls of the measuring pipe line facing to the ultrasonic transmitter and ultrasonic receiver are formed to be parallel from each other, so that the loss of energy accompanying to the transmission/receiving of the ultrasonic may be reduced and the ultrasonic wave may be transmitted/received efficiently.

According to the embodiment described in Claim 9, the ultrasonic transmitter and ultrasonic receiver are fixed to the adapters having flat transmitting/receiving surfaces, so that it is effectively applied especially to a measuring pipe line having a small bore diameter which is difficult to process, in addition to the effect described with reference to Claim 8.

According to the embodiment described in Claim 10, the reflecting surfaces for reflecting the leaked ultrasonic propagating in the measuring pipe line is provided on the outer surface of the measuring pipe line, so that a degree of freedom of frequency of samplings may be widened in processing the signals and a margin may be provided even for the changes of propagating signals based on the changes of sound velocity, thereby allowing to maintain a good S/N.

According to the embodiment described in Claim 11, the oscillation frequency of the oscillator is switched to the neighborhood of the thickness direction vibration frequency and thickness shearing direction vibration frequency, so that the ultrasonic wave may be prevented from attenuating due to such foreign matters as bubbles and particles even if they are mixed in the fluid to be measured and a stable receiving level may be maintained.

According to the embodiment described in Claim 12, a plural pair of piezoelectric vibrators having different vibration frequencies are used, so that a degree of freedom for dealing with the attenuation of ultrasonic caused by the mixed foreign matters is improved and more stable receiving level may be maintained.

## Claims

1. An ultrasonic fluid flowmeter for measuring a flow rate of a fluid by irradiating ultrasonic waves to said fluid, creating a vibration of said fluid, and receiving a signal of said ultrasonic waves modulated by the vibration of the fluid, comprising:
an ultrasonic transmitter (12;29;38;44;60) and an ultrasonic receiver (13;30;39;61) mounted to a measuring pipe line (10;28;31;32;37;40;41;54) in a state not contacting the said fluid, arranged to transmit and receive said ultrasonic waves;
driving means (14;15) arranged to make said ultrasonic transmitter (12;29;38;44;60) intermittently emit burst waves (S_{B}) having an oscillation frequency (f_{OS}) ;
standard timing means (17) arranged to send a standard signal (S₁) to control a timing for emitting said burst waves(S_{B});
sampling signal generating means (18) arranged to generate, depending on a diameter of said measuring pipe line (10;28;31;32;37;40;41;54) and a sound velocity (C₁) of said ultrasonic waves in said fluid, a sampling signal (S₂) synchronized with said standard signal (S₁) to determine the time of sampling said signal of said ultrasonic waves received by said ultrasonic receiver;
sampling means (20) arranged to sample by means of said sampling signal (S₂) said signal which is amplitude-modulated by the fluid vibration; and
filtering means (22-25) arranged to find out an envelope of said signal to derive a frequency of vibration of the fluid from said envelope.

2. The ultrasonic fluid flowmeter according to claim 1, wherein a vortex generator (11) is provided in said measuring pipe line (10;28;31;32;37;40;41) to generate the fluid vibration by Karman vortices generated on the downstream side thereof.

3. The ultrasonic fluid flowmeter according to claim 1, which is provided with a nozzle (55) in said pipe line (54) and a target (57) on the downstream side of said nozzle (55) such that a jet of the fluid is throttled by said nozzle (55) and directed on said target (57), thus causing the fluid vibration.

4. The ultrasonic fluid flowmeter according to claim 1, 2 or 3, wherein a tuned amplifier (21) having a low Q value is inserted in a signal processing circuit at either the input side or the output side of said sampling means (20).

5. The ultrasonic fluid flowmeter according to claim 1, 2 or 3, wherein said oscillation frequency is set in between a resonant frequency and an antiresonant frequency of said ultrasonic receiver.

6. The ultrasonic fluid flowmeter according to claim 1, 2 or 3, wherein said oscillation frequency is set so as to be equal to a resonant frequency of said ultrasonic transmitter in between a resonant frequency and an antiresonant frequency of said ultrasonic receiver.

7. The ultrasonic fluid flowmeter according to claim 1, 2 or 3, wherein a vibrator (13C;26B;27C) at least stored in said ultrasonic receiver (13;26;27) is fixed to a holder (13A;26A;27A) of said ultrasonic receiver through the intermediary of an elastic body (13B;26C;27B).

8. The ultrasonic fluid flowmeter according to claim 1, 2 or 3, wherein inner walls (28C,28D) of said measuring pipe line (28) facing said ultrasonic transmitter (29) and ultrasonic receiver (30) fixed to said measuring pipe line (28) are formed to be parallel to each other.

9. The ultrasonic fluid flowmeter according to claim 1, 2 or 3, wherein said ultrasonic transmitter (29) and ultrasonic receiver (30) are respectively fixed to adapters (33,34) which are fixed to said measuring pipe line (32) and whose transmitting/receiving surfaces are flat.

10. The ultrasonic fluid flowmeter according to claim 1, 2 or 3, wherein grooves (37A-D;40A-D) or convex portions (41A,41B) are provided on the outer surface of said pipe line (37;40;41) extending in the axial direction thereof so as to provide reflecting surfaces for leaked ultrasonic waves propagating through said pipe line (37;40;41) respectively on both sides of the ultrasonic transmitter (38) and ultrasonic receiver (39).

11. The ultrasonic fluid flowmeter according to claim 1, 2 or 3, wherein an oscillator (42) is provided which is adapted to switch between a piezoelectric vibrator (PZ1) arranged to oscillate in a thickness direction and a piezoelectric vibrator (PZ2) arranged to oscillate in a thickness shearing direction, respectively stored in said ultrasonic transmitter and ultrasonic receiver.

12. The ultrasonic fluid flowmeter according to claim 1, 2 or 3, wherein pairs of piezoelectric vibrators (PZ3-5) having different oscillation frequencies are stored in said ultrasonic transmitter (12;44) and said ultrasonic receiver (13) such that a piezoelectric vibrator within the ultrasonic transmitter corresponds with a piezoelectric vibrator within the ultrasonic receiver and wherein switching means are provided to selectively switch one pair of piezoelectric vibrators.

## Patentansprüche

1. Ultraschallfluidflußmesser zum Messen einer Flußrate eines Fluids durch Einstrahlung von Ultraschallwellen in das Fluid, Erzeugen einer Schwingung des Fluids und Empfangen eines Signals der durch die Schwingung des Fluids modulierten Ultraschallwellen, mit:
einem Ultraschallsender (12, 29, 38, 44, 60) und einem Ultraschallempfänger (13, 30, 39, 61), die an einer Meßröhrenleitung (10, 28, 31, 32, 37, 40, 41, 54) in einem Zustand angebracht sind, in dem sie das Fluid nicht kontaktieren, wobei sie zur Übertragung und zum Empfang der Ultraschallwellen angeordnet sind;
Treibermittel (14, 15), das angeordnet ist, um den Ultraschallsender (12, 29, 38, 44, 60) intermittierend Burst-Wellen (S_{B}) mit einer Oszillationsfrequenz (f_{OS}) emittieren zu lassen;
Standardzeitsteuerungsmittel (17), die angeordnet sind, um ein Standardsignal (S₁) auszusenden, um eine Zeitsteuerung zum Emittieren der Burst-Wellen (S_{B}) zu steuern;
Abtastsignalerzeugungsmittel (18), die angeordnet sind, um in Abhängigkeit von einem Durchmesser der Meßröhrenleitung (10, 28, 31, 32, 37, 40, 41, 54) und einer Schallgeschwindigkeit (C₁) der Schallwellen in dem Fluid ein Abtastsignal (S₂) synchron mit dem Standardsignal (S₁) zu erzeugen, um die Zeit der Abtastung des Signals der Ultraschallwellen zu bestimmen, die von dem Ultraschallempfänger empfangen werden;
Abtastmittel (20), die zum Abtasten des Signals mittels des Abtastsignals (S₂) angeordnet sind, das durch die Fluidschwingung amplitudenmoduliert ist; und
Filtermittel (22-25), das angeordnet ist, um eine Einhüllende des Signals zu finden, um eine Frequenz der Schwingung des Fluids aus der Einhüllenden abzuleiten.

2. Ultraschallfluidflußmesser nach Anspruch 1, bei dem ein Starkwirbel-Generator (11) in der Meßröhrenleitung (10, 28, 31, 32, 37, 40, 41) zur Erzeugung der Fluidschwingung durch Karman-Wirbel vorgesehen ist, die auf seiner stromabgelegenen Seite erzeugt werden.

3. Ultraschallfluidflußmesser nach Anspruch 1, der mit einer Düse (55) in der Röhrenleitung (54) und einem Ziel (57) auf der stromabgelegenen Seite der Düse (55) ausgestattet ist, so daß ein Jet des Fluids von der Düse (55) ausgestoßen und auf das Ziel (47) gerichtet ist, wodurch die Fluidschwingung erzeugt wird.

4. Ultraschallfluidflußmesser nach Anspruch 1, 2 oder 3, bei dem ein abgestimmter Verstärker (21) mit einem niedrigen Q-Wert in einer Signalverarbeitungsschaltung eingeführt ist, entweder auf der Eingangsseite oder der Ausgangsseite des Abtastmittels (20).

5. Ultraschallfluidflußmesser nach Anspruch 1, 2 oder 3, bei dem die Oszillationsfrequenz zwischen einer Resonanzfrequenz und einer Antiresonanzfrequenz des Ultraschallempfängers eingestellt ist.

6. Ultraschallfluidflußmesser nach Anspruch 1, 2 oder 3, bei dem die Oszillationsfrequenz so eingestellt ist, daß sie gleich einer Resonanzfrequenz des Ultraschallsenders zwischen einer Resonanzfrequenz und einer Antiresonanzfrequenz des Ultraschallempfängers ist.

7. Ultraschallfluidflußmesser nach Anspruch 1, 2 oder 3, bei dem eine Vibrationsvorrichtung (13C, 26B, 27C), die zumindest in dem Ultraschallempfänger (13, 26, 27) enthalten ist, auf einem Halter (13A, 26A, 27A) des Ultraschallempfängers über einen zwischengestellten elastischen Körper (13B, 26C, 27B) befestigt ist.

8. Ultraschallfluidflußmesser nach Anspruch 1, 2 oder 3, bei dem innere Wände (28C, 28D) der Meßröhrenleitung (28), die dem Ultraschallsender (29) und dem Ultraschallempfänger (30) gegenüberliegen, die an der Meßröhrenleitung (28) befestigt sind, parallel zueinander ausgebildet sind.

9. Ultraschallfluidflußmesser nach Anspruch 1, 2 oder 3, bei dem der Ultraschallsender (29) und der Ultraschallempfänger (30) jeweils an Adaptern (33, 34) befestigt sind, die mit der Meßröhrenleitung (32) verbunden sind und deren Sende/Empfänger-Oberflächen flach sind.

10. Ultraschallfluidflußmesser nach Anspruch 1, 2 oder 3, bei dem Nuten (37A-D, 40A-D) oder konvexe Abschnitte (41A, 41B) in der äußeren Oberfläche der Röhrenleitung (37, 40, 41) vorgesehen sind, die sich in deren Axialrichtung erstrecken, um so reflektierende Oberfläche für leckende Ultraschallwellen bereitzustellen, die sich über die Röhrenleitung (37, 40, 41) jeweils auf beiden Seiten des Ultraschallsenders (38) und des Ultraschallempfängers (39) ausbreiten.

11. Ultraschallfluidflußmesser nach Anspruch 1, 2 oder 3, bei dem ein Oszillator (42) vorgesehen ist, der ausgestaltet ist, um zwischen einer piezoelektrischen Vibrationsvorrichtung (PZ1), die zur Schwingung in einer Dickenrichtung angeordnet ist, und einer piezoelektrischen Vibrationsvorrichtung (PZ2), die zu einer Oszillation in einer Dicken-Scher-Richtung angeordnet ist, die jeweils in den Ultraschallsender und Ultraschallempfänger gespeichert sind, umzuschalten.

12. Ultraschallfluidflußmesser nach Anspruch 1, 2 oder 3, bei dem Paare piezoelektrische Vibrationsvorrichtungen (PZ3-5) mit verschiedenen Oszillationsfrequenzen in dem Ultraschallsender (12, 44) und dem Ultraschallempfänger (13) enthalten sind, so daß eine piezoelektrische Vibrationsvorrichtung innerhalb des Ultraschallsenders einer piezoelektrischen Vibrationsvorrichtung in dem Ultraschallempfänger entspricht, und wobei Umschaltmittel vorgesehen sind, um selektiv ein Paar piezoelektrischer Vibrationsvorrichtungen zu schalten.

## Revendications

1. Débitmètre de fluide à ultrasons pour mesurer le débit d'un fluide en irradiant ledit fluide par des ondes ultrasonores, créant une vibration dudit fluide, et recevant un signal desdites ondes ultrasonores modulées par la vibration du fluide, comprenant :
un émetteur d'ultrasons (12 ; 29 ; 38 ; 44 ; 60) et un récepteur d'ultrasons (13 ; 30 ; 39 ; 61) monté sur une canalisation de mesure (10 ; 28 ; 31 ; 32 ; 37 ; 40 ; 41 ; 54) dans un état non en contact avec ledit fluide, conçus pour émettre et recevoir lesdites ondes ultrasonores ;
des moyens d'attaque (14 ; 15) conçus pour que ledit émetteur d'ultrasons (12 ; 29 ; 38 ; 44 ; 60) émette de manière intermittente des ondes en salves (S_{B}) ayant une fréquence d'oscillation (f_{OS}) ;
des moyens de synchronisation standard (17) conçus pour envoyer un signal standard (S₁) pour commander une synchronisation d'émission desdites ondes en salves (S_{B}) ;
des moyens de production de signal d'échantillonnage (18) conçus pour produire, en fonction du diamètre de ladite canalisation de mesure (10 ; 28 ; 31 ; 32 ; 37 ; 40 ; 41 ; 54) et de la vitesse du son (C₁) desdites ondes ultrasonores dans ledit fluide, un signal d'échantillonnage (S₂) synchronisé audit signal standard (S₁) pour déterminer l'instant d'échantillonnage dudit signal desdites ondes ultrasonores reçues par ledit récepteur d'ultrasons ;
des moyens d'échantillonnage (20) conçus pour échantillonner au moyen dudit signal d'échantillonnage (S₂) ledit signal qui est modulé en amplitude par la vibration du fluide ; et
des moyens de filtrage (22 à 25) conçus pour trouver l'enveloppe dudit signal pour obtenir une fréquence de vibration du fluide à partir de ladite enveloppe.

2. Débitmètre de fluide à ultrasons selon la revendication 1, dans lequel un générateur de tourbillons (11) est disposé dans ladite canalisation de mesure (10 ; 28 ; 31 ; 32 ; 37 ; 40 ; 41) pour produire la vibration de fluide par des tourbillons de Karman produits du côté aval de ce dernier.

3. Débitmètre de fluide à ultrasons selon la revendication 1, qui est muni d'une buse (55) dans ladite canalisation (54) et d'une cible (57) du côté aval de ladite buse (55) de sorte qu'un jet de fluide est étranglé par ladite buse (55) et est orienté sur ladite cible (57), provoquant ainsi la vibration du fluide.

4. Débitmètre de fluide à ultrasons selon la revendication 1, 2 ou 3, dans lequel un amplificateur accordé (21) ayant une faible valeur Q est inséré dans un circuit de traitement de signal soit côté entrée, soit côté sortie desdits moyens d'échantillonnage (20).

5. Débitmètre de fluide à ultrasons selon la revendication 1, 2 ou 3, dans lequel ladite fréquence d'oscillation est fixée entre une fréquence de résonance et une fréquence d'antirésonance dudit récepteur d'ultrasons.

6. Débitmètre de fluide à ultrasons selon la revendication 1, 2 ou 3, dans lequel ladite fréquence d'oscillation est fixée de façon à être égale à une fréquence de résonance dudit émetteur d'ultrasons entre une fréquence de résonance et une fréquence d'antirésonance dudit récepteur d'ultrasons.

7. Débitmètre de fluide à ultrasons selon la revendication 1, 2 ou 3, dans lequel un vibrateur (13C ; 26B ; 27C) au moins stocké dans ledit récepteur d'ultrasons (13 ; 26 ; 27) est fixé à un support (13A ; 26A ; 27A) dudit récepteur d'ultrasons par l'intermédiaire d'un corps élastique (13B ; 26C ; 27B).

8. Débitmètre de fluide à ultrasons selon la revendication 1, 2 ou 3, dans lequel des parois intérieures (28C, 28D) de ladite canalisation de mesure (28) faisant face audit émetteur d'ultrasons (29) et audit récepteur d'ultrasons (30) fixés sur ladite canalisation de mesure (28), sont formées pour être parallèles les unes aux autres.

9. Débitmètre de fluide à ultrasons selon la revendication 1, 2 ou 3, dans lequel ledit émetteur d'ultrasons (29) et ledit récepteur d'ultrasons (30) sont respectivement fixés à des adaptateurs (33, 34) qui sont fixés à ladite canalisation de mesure (32) et dont les surfaces d'émission/réception sont plates.

10. Débitmètre de fluide à ultrasons selon la revendication 1, 2 ou 3, dans lequel des rainures (37A-D ; 40A-D) ou des parties convexes (41A, 41B) sont prévues sur la surface extérieure de ladite canalisation (37 ; 40 ; 41) s'étendant dans la direction axiale de cette dernière de façon à définir des surfaces de réflexion pour des ondes ultrasonores ayant fui se propageant à travers ladite canalisation (37 ; 40 ; 41) respectivement sur les deux côtés de l'émetteur d'ultrasons (38) et du récepteur d'ultrasons (39).

11. Débitmètre de fluide à ultrasons selon la revendication 1, 2 ou 3, dans lequel un oscillateur (42) est prévu, lequel est conçu pour commuter entre un vibrateur piézo-électrique (PZ1) conçu pour osciller dans le sens de l'épaisseur et un vibrateur piézo-électrique (PZ2) conçu pour osciller dans le sens de cisaillement d'épaisseur, respectivement stockés dans ledit émetteur d'ultrasons et dans ledit récepteur d'ultrasons.

12. Débitmètre de fluide à ultrasons selon la revendication 1, 2 ou 3, dans lequel des couples de vibrateurs piézo-électriques (PZ3-5) ayant des fréquences d'oscillation différentes sont stockés dans ledit émetteur d'ultrasons (12 ; 44) et dans ledit récepteur d'ultrasons (13) de sorte qu'un vibrateur piézo-électrique à l'intérieur de l'émetteur d'ultrasons correspond à un vibrateur piézo-électrique à l'intérieur du récepteur d'ultrasons et dans lequel des moyens de commutation sont prévus pour commuter de manière sélective un couple de vibrateurs piézo-électriques.
